**Europäisches Patentamt**

**European Patent Office**

**Office européen des brevets**

(19)

(11) Numéro de publication : **0 012 665**
**B1**

(12) # FASCICULE DE BREVET EUROPÉEN

(45) Date de publication du fascicule du brevet :
03.08.83

(21) Numéro de dépôt : **79400959.7**

(22) Date de dépôt : **04.12.79**

(51) Int. Cl.³ : **G 01 N 27/90**

(54) **Circuit de correction automatique d'un signal électrique émis par un capteur différentiel déséquilibré.**

(30) Priorité : **07.12.78 FR 7834478**

(43) Date de publication de la demande :
**25.06.80 Bulletin 80/13**

(45) Mention de la délivrance du brevet :
**03.08.83 Bulletin 83/31**

(84) Etats contractants désignés :
**BE DE GB IT NL**

(56) Documents cités :
**GB A 999 917**
**US A 3 566 258**
**US A 3 916 301**
**US A 4 127 813**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Pigeon, Michel**
**14, Avenue du Maréchal Foch**
**F-91440 Bures sur Yvette (FR)**
Inventeur : **Saglio, Robert**
**9, rue des Marchais**
**F-92160 Antony (FR)**

(74) Mandataire : **Mongrédien, André et al**
**c/o BREVATOME 25, rue de Ponthleu**
**F-75008 Paris (FR)**

EP 0 012 665 B1

Jouve, 18, rue St-Denis, 75001 Paris, France

Circuit de correction automatique d'un signal électrique émis par un capteur différentiel déséquilibré

La présente invention a pour objet un circuit de correction automatique d'un signal émis par un capteur différentiel déséquilibré. Elle trouve une application dans le contrôle non destructif par courants de Foucault et, plus généralement, dans tous les cas où l'on mesure un signal délivré par un capteur différentiel.

On sait que le contrôle d'une pièce métallique par courants de Foucault consiste en l'étude des variations des courants induits dans cette pièce par le champ magnétique d'une bobine parcourue par un courant d'excitation alternatif. De tels courants produisent, en retour, un champ qui s'oppose au champ inducteur. Ils modifient donc l'impédance de la bobine d'excitation. Cette bobine est disposée dans une sonde que l'on déplace le long de la pièce à contrôler. Tout défaut de cette dernière (changement de dimension, variation de conductivité électrique, criques, etc...) perturbe le parcours et/ou l'intensité des courants de Foucault et, corrélativement, modifie l'impédance de la bobine.

Une sonde pour le contrôle par courants de Foucault est généralement constituée par deux bobines voisines, alimentées en opposition et placées dans deux branches adjacentes d'un pont de mesure. Le passage d'un défaut dans le champ de la sonde déséquilibre deux fois ce pont, dans un sens puis dans l'autre. La tension délivrée par la sonde est amplifiée puis analysée, et enfin représentée sur un écran tube cathodique par sa composante résistive (ou réelle) X et sa composante réactive (ou imaginaire) Y. La tension alternative délivrée par la sonde est ainsi représentée par un point de coordonnées X, Y. Lorsqu'un défaut passe dans le champ de la sonde, ce point trace une courbe qui présente en général deux lobes formant un huit incliné. Chaque défaut peut être alors identifié par l'inclinaison de ces lobes par rapport à un axe de référence et par leur amplitude.

Les sondes pour le contrôle par courants de Foucault présentent souvent et par construction, un certain déséquilibre entre les deux branches du pont, de sorte que, même en l'absence de défaut dans la pièce en cours de contrôle, le signal émanant de la sonde n'est pas rigoureusement nul. En cas de détection d'un défaut, le signal de mesure contient alors une part qui est due au déséquilibre du pont et qui se superpose au signal de mesure proprement dit.

Cette source d'erreur se rencontre plus généralement dans tous les appareils qui utilisent des capteurs différentiels, c'est-à-dire des capteurs composés de deux parties analogues dont les effets sont sensés s'annuler « à vide ». Le cas le plus fréquent est celui des ponts de mesure rencontrés en électronique, notamment dans les impédancemètres et les phasemètres.

On connaît des dispositifs aptes à corriger cette erreur. Ils consistent en des circuits de correction réglables manuellement (à l'aide d'un potentiomètre par exemple) qui permettent d'annuler le signal de mesure lorsque le capteur est exempt de toute perturbation. Cette correction est maintenue lors de la mesure proprement dite afin que le signal global soit débarrassé de la part due au déséquilibre du capteur.

De tels moyens de correction à potentiomètre sont couramment utilisés dans les appareils de contrôle par courants de Foucault. Si ces dispositifs donnent une relative satisfaction, ils sont néanmoins lourds de mise en œuvre puisqu'ils nécessitent l'intervention de l'opérateur.

On connaît également des circuits de correction tels que celui qui est décrit dans le brevet américain US-A-3 566 258. Ce circuit comprend deux boucles de correction, l'une fonctionnant avec une composante en phase avec le signal d'excitation de la sonde et l'autre avec une composante en quadrature. Un signal de correction est engendré par un additionneur recevant les deux dites composantes. Ce signal de correction est appliqué à la sonde même, qui est ainsi corrigée intrinsèquement.

Les inconvénients de ce circuit sont qu'il doit fonctionner en permanence pendant la mesure et qu'il modifie la sonde. La présente invention a justement pour but d'éviter ces inconvénients en proposant un circuit dans lequel on mémorise une fois pour toutes le signal de correction à appliquer et cela grâce à des moyens numériques et dans lequel le signal de correction n'est pas appliqué à la sonde mais après celle-ci, ce qui laisse la sonde intacte. Enfin il est prévu dans le circuit de l'invention des moyens de réglage automatique qui améliorent la sensibilité et facilitent la mise en œuvre.

De façon précise, la présente invention a pour objet un circuit de correction automatique d'un signal électrique émis par un capteur différentiel pouvant présenter un certain déséquilibre, le signal contenant ainsi une part due à ce déséquilibre, ce circuit comprenant un analyseur recevant d'une part, une tension de référence et une tension en quadrature avec cette tension de référence, et d'autre part le signal à corriger, cet analyseur délivrant deux tensions continues X et Y proportionnelles aux deux composantes du signal respectivement en phase et en quadrature de phase avec ladite tension de référence, le circuit comprenant encore un sommateur à deux entrées et une sortie, caractérisé en ce qu'il comprend en outre :

A. un amplificateur à gain réglable,

B. des moyens pour commander le gain de l'amplificateur à une valeur maximum et à une valeur minimum et à une valeur qui dépend de la tension obtenue à sa sortie,

C. un premier étage constitué par : un interrupteur, un comparateur à seuil recevant la tension X ; un compteur-décompteur relié au comparateur ; une horloge alimentant le compteur-décompteur ; un convertisseur numérique-analogique relié au compteur ; un multiplieur à deux entrées et une sortie, l'une des entrées recevant ladite tension de référence et l'autre étant reliée au convertisseur,

D. un deuxième étage constitué par : un interrupteur, un comparateur à seuil recevant la tension Y ; un compteur-décompteur relié au comparateur ; une horloge alimentant le compteur-décompteur ; un convertisseur numérique-analogique relié au compteur-décompteur ; un multiplieur à deux entrées et une sortie, l'une des entrées recevant la tension en quadrature avec la tension de référence et l'autre étant reliée au convertisseur,

E. l'une des entrées du sommateur, reliée à la sortie du multiplieur du premier étage, et l'autre à la sortie du multiplieur du second étage, et la sortie du sommateur reliée à l'entrée du circuit par un inverseur de phase.

En outre il est prévu une application de l'invention telle qu'elle est décrite dans la revendication 4.

De toute façon, les caractéristiques et avantages de la présente invention apparaîtront mieux après la description qui suit, d'un exemple de réalisation donné à titre explicatif et nullement limitatif. Cette description se réfère à des dessins annexés sur lesquels :

la figure 1 représente le schéma synoptique du circuit de l'invention,

la figure 2 illustre un exemple d'application du circuit de l'invention à la réalisation d'un circuit d'équilibrage pour dispositif de contrôle non destructif par courants de Foucault.

Dans les systèmes perfectionnés de contrôle par courants de Foucault, la sonde de mesure est excitée par un signal multifréquence. Cela permet d'éliminer certains paramètres jugés indésirables, pour ne conserver, dans la courbe illustrant les variations du signal délivré par la sonde, que les parties représentant les défauts que l'on recherche.

Dans la description qui suit, on supposera à titre explicatif que l'excitation du capteur dont on désire corriger le signal d'émission, s'effectue selon cette technique multifréquence. Il va de soi cependant que le circuit de l'invention s'applique aussi, et a fortiori, au cas où le capteur à corriger fonctionne en monofréquence.

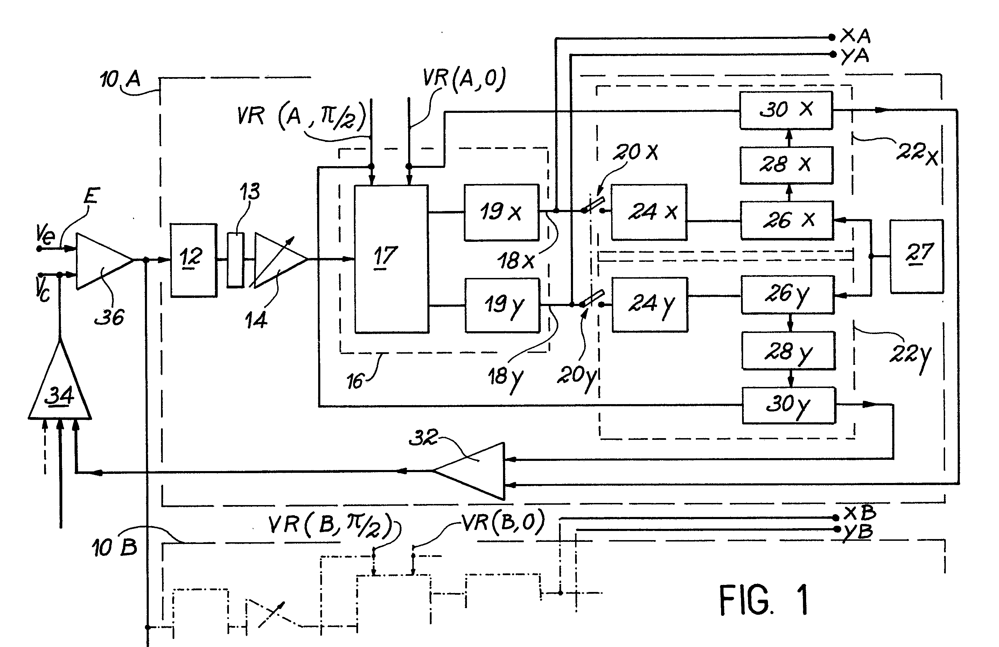

Le circuit de la figure 1 correspond au cas particulier où le signal délivré par le capteur est un signal composite à deux fréquences A et B. Ce signal $V_e$ est appliqué sur une entrée E du circuit de correction. Ce circuit comprend deux voies, respectivement 10A et 10B, affectées respectivement aux corrections des composantes de fréquences A et B. Comme ces deux voies sont identiques, une seule sera décrite, par exemple celle qui est relative à la fréquence A. Cette voie 10a comprend :

a) un filtre passe-bande 12 centré sur la fréquence A, suivi d'un amplificateur réglable 14 ;

b) un analyseur 16 recevant, d'une part, une tension de référence $V_R(A, O)$ ayant la fréquence A et une tension $V_R(A, \pi/2)$ ayant la même fréquence A, mais étant en quadrature avec la tension de référence précédente, et, d'autre part, la tension filtrée et amplifiée ; cet analyseur possède deux sorties 18X et 18Y qui véhiculent deux tensions continues $X_A$ et $Y_A$ ; ces tensions sont proportionnelles aux deux composantes du signal à la fréquence A, respectivement en phase et en quadrature de phase avec la tension de référence $V_R(A, O)$ ;

c) un premier étage 22X de traitement de la tension X, cet étage étant mis en service par un interrupteur 20X. Ce premier étage est constitué par un comparateur à seuil 24X recevant la tension X. Le seuil est fixé par un réglage non représenté ; ce seuil peut d'ailleurs être nul. La sortie du comparateur est reliée à un compteur-décompteur 26X alimenté par une horloge 27. Le compteur-décompteur est suivi d'un convertisseur numérique-analogique 28X relié à un multiplieur 30X à deux entrées et une sortie, l'une des entrées recevant ladite tension de référence $V_R(A, O)$ à la fréquence A et l'autre étant reliée au convertisseur 28X ;

d) un deuxième étage 22Y, de traitement de la tension Y, cet étage étant mis en service par un interrupteur 20Y. Ce second étage est constitué, comme le premier, par un comparateur à seuil 24Y ayant une entrée recevant la tension Y, et une sortie reliée à un compteur-décompteur 26Y, alimenté par l'horloge 27. Le compteur-décompteur est suivi d'un convertisseur numérique-analogique 28Y, lequel est relié à un multiplieur 30Y à deux entrées et une sortie, l'une des entrées recevant la tension $V_R(A, \pi/2)$ en quadrature avec la tension de référence $V_R(A, O)$ et l'autre étant reliée au convertisseur ;

e) un sommateur 32 à deux entrées et une sortie, l'une des entrées étant reliée à la sortie du multiplieur 30X du premier étage, l'autre à la sortie du multiplieur 30Y du second étage. La sortie du sommateur est réunie à un déphaseur 34 de $\pi$ qui délivre une tension $V_c$ qui est ajoutée à la tension d'entrée $V_e$ par un sommateur 36.

La structure de la voie 10B est analogue à ceci près qu'elle reçoit un signal de référence $V_R(B, O)$ à la fréquence B et un signal en quadrature $V_R(B, \pi/2)$ à cette même fréquence. Le signal de correction émanant de cette seconde voie est injecté à l'entrée par le sommateur 36.

Le fonctionnement de ce circuit est le suivant. Le filtre passe-bande 12 filtre, dans le signal appliqué à l'entrée du circuit, une bande centrée sur la fréquence A. Ce filtre peut être avantageusement à forte pente, par exemple à 24 décibels par octave. Le signal filtré est ensuite amplifié par l'amplificateur 14 puis analysé dans le circuit 16. Celui-ci est constitué, par exemple, par un échantillonneur à mémoire 17 recevant les tensions $V_R(A, O)$ et $V_R(A, \pi/2)$ et par deux filtres passe-bas 19X et 19Y qui éliminent le bruit de fond résiduel dû à l'échantillonnage. Ce circuit est classique. Il délivre sur ses connexions de sortie 18X et 18Y des tensions X et Y qui sont proportionnelles aux composantes en phase et en quadrature avec le signal de référence $V_R(A, O)$.

Les interrupteurs 20X et 20Y sont initialement fermés et les comparateurs 24X et 24Y reçoivent les tensions X et Y. Ils délivrent un signal binaire dont la valeur commande le comptage ou le décomptage dans les compteurs-décompteurs 26X et 26Y. Tant que les signaux X et Y n'ont pas atteint le seuil des comparateurs 24X et 24Y (dans la pratique ces seuils peuvent être nuls) les impulsions de l'horloge 27 sont comptées ou décomptées (suivant le signal de X et de Y) dans les compteurs-décompteurs.

Lorsque le capteur qui délivre la tension d'entrée $V_e$ n'est soumis à aucune perturbation, ce signal ne contient que la part due au déséquilibre du capteur. En conséquence, les contenus des compteurs-décompteurs 26X et 26Y reflètent les composantes X et Y du signal de déséquilibre à la fréquence A. Ces contenus numériques sont transformés en tensions continues par les convertisseurs 28X et 28Y, puis en tensions alternatives de fréquence A par les multiplieurs 30X et 30Y.

Le sommateur 32 reconstitue une tension alternative globale qui est ensuite déphasée de 180° par le circuit 34 pour constituer la tension de correction $V_c$. Cette tension est ajoutée à la tension d'entrée $V_e$.

En d'autres termes, le circuit représenté constitue une boucle de contre-réaction qui permet de réinjecter à l'entrée du circuit une tension de correction $V_c$ qui s'oppose à la tension d'entrée $V_e$ jusqu'à ce que la somme $V_e + V_c$ soit nulle.

La vitesse avec laquelle le circuit décrit parvient à corriger la tension d'entrée, autrement dit la vitesse « d'équilibrage », dépend des niveaux des tensions de référence $V_R(A, O)$ et $V_R(A, \pi/2)$ et de la fréquence de l'horloge 27. Ce dernier paramètre permet de faire varier très facilement cette vitesse.

Lorsque l'équilibre est atteint, c'est-à-dire lorsque les tensions X et Y sont nulles, les interrupteurs 20X et 20Y sont ouverts. Les compteurs 26X et 26Y gardent les contenus numériques qu'ils avaient à l'équilibre. Ces contenus numériques, transformés en grandeurs analogiques par les convertisseurs 28X et 28Y, permettent de continuer à appliquer à l'entrée du circuit une tension de correction $V_c$ correcte qui vient juste compenser les défauts d'équilibrage du capteur. Alors, les signaux de mesure $X_A$ et $Y_A$ délivrés par l'analyseur 16 sont débarrassés de la part due au déséquilibre du capteur. Ils peuvent être ensuite acheminés vers d'autres organes de mesure et de traitement.

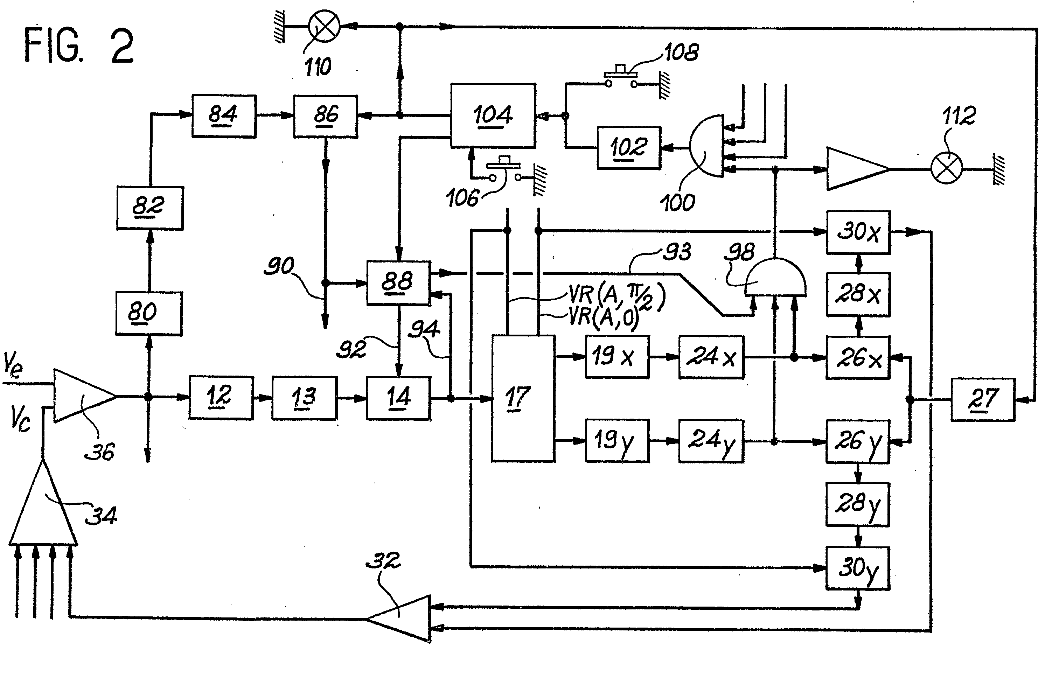

Le circuit qui vient d'être décrit illustre des moyens essentiels de l'invention. Tel qu'il est représenté sur la figure 1, il présente l'inconvénient de nécessiter l'intervention de l'opérateur pour décider de la fin de l'équilibrage et pour augmenter progressivement les gains jusqu'aux valeurs désirées. La figure 2 illustre un exemple de réalisation d'un circuit qui évite cette servitude.

Le circuit représenté sur cette figure comprend, en plus des organes déjà représentés sur la figure 1 et qui portent, pour simplifier, les mêmes références : un circuit 80 de détection de crêtes ; un comparateur 82, un circuit bascule monostable 84 ; une porte logique 86 ; un circuit 88 de commande automatique de gain ; une connexion 90 qui est issue de la porte 86 et est dirigée vers les autres voies de traitement ; une connexion 92 de sortie du circuit 88 qui est dirigée sur le circuit 14 à gain variable et une connexion 94 qui relie cet amplificateur au circuit 88 ; par ailleurs, une connexion 93 qui relie le circuit 88 à une porte logique 98 de type ET, laquelle reçoit sur deux autres entrées les signaux délivrés par des circuits 24X et 24Y ; une porte logique de type ET 100 qui est reliée à la sortie de la porte 98 ainsi qu'aux sorties des portes équivalentes comprises dans les autres voies de traitement ; un circuit bascule monostable 102 ; une bascule bistable 104 ayant une entrée de remise à zéro, une sortie S et une sortie complémentaire $\bar{S}$ ; un bouton poussoir d'équilibrage 106 ; un bouton poussoir 108 d'ordre de remise à zéro ; un voyant lumineux 110 qui est relié à la sortie de la bascule bistable 104, laquelle commande l'horloge 27 ; enfin, un voyant lumineux 112 qui est connecté à la sortie de la porte logique 98.

Le fonctionnement de ce circuit est basé sur le réglage de l'amplificateur 14 dont le gain est commandé extérieurement à une valeur maximum ou à une valeur minimum, ou de manière automatique en fonction de la tension obtenue à sa sortie. Lorsque le bouton poussoir 106 est actionné, la bascule bistable 104 délivre sur sa sortie S un signal qui allume le voyant 110, indiquant que l'opération d'équilibrage est en cours. Par sa sortie $\bar{S}$, la bascule bistable 104 commande le circuit de commande automatique de gain 88 et lorsque le signal est au niveau logique 1 sur cette sortie $\bar{S}$, la commande impose à l'amplificateur 14 son gain maximum qui peut être de 50 dB. L'horloge 27 est libérée par la bascule bistable 104.

Pour éviter la saturation du préamplificateur 36, qui est commun à tous les circuits d'équilibrage, le détecteur de crêtes 80 suivi du comparateur 82, indiquent l'importance du signal à la sortie du préamplificateur 36. Si ce signal est trop important, la porte 86, qui est libérée par le circuit bascule monostable 84 pendant le temps d'équilibrage, impose un gain unité à tous les amplificateurs 14. Une opération de pré-équilibrage s'effectue alors selon la procédure décrite précédemment. Il en résulte que la tension de sortie du préamplificateur 36 diminue jusqu'à ce que toutes les voies soient équilibrées. Alors, la commande de gain de l'amplificateur 14 est libérée, chaque voie pouvant alors s'équilibrer indépendamment l'une de l'autre. Le gain est alors asservi et croît progressivement en fonction de la tension de sortie.

Les moyens permettant cet asservissement sont connus. Il s'agit par exemple d'un système à lampe et photo-résistance dans lequel la tension de sortie sert à exciter une lampe qui agit sur une photorésistance placée en dérivation sur l'amplificateur à commander.

Lorsque le gain maximum est atteint, un signal est appliqué par la connexion 96 sur la porte logique 98, simultanément avec les signaux délivrés par les circuits 24X et 24Y ; un signal est alors appliqué sur la seconde porte logique 100. Lorsque toutes les voies sont équilibrées, cette dernière porte reçoit, sur toutes ses entrées, un signal indiquant la fin de l'équilibrage. Cette porte délivre donc sur sa sortie un signal de commande par le circuit bascule monostable 102, ce qui permet de maintenir cet état d'équilibrage pendant un temps suffisant. La bascule bistable 104 est ensuite remise à zéro par le monostable 102 et la lampe 110 s'éteint. Cet arrêt de l'équilibrage peut être obtenu à tout moment à l'aide du bouton poussoir 108, en cas de difficulté quelconque (le capteur étant par exemple défectueux). Sur chacune des voies, une indication de l'équilibrage est obtenue par le voyant 112.

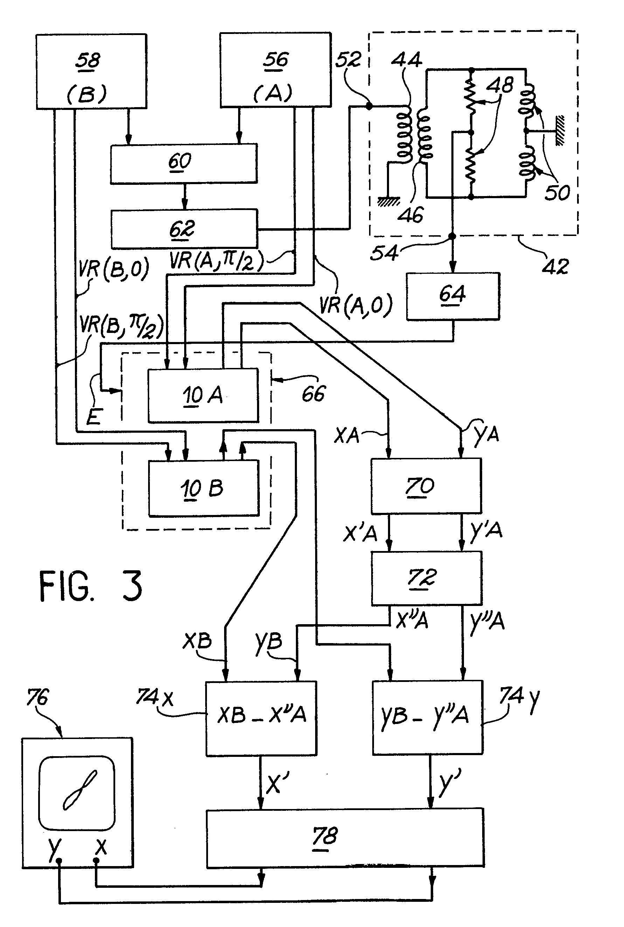

Le circuit représenté sur la figure 3 illustre une application de l'invention à la réalisation d'un circuit de correction pour une installation de contrôle non destructif par courants de Foucault.

Sur cette figure, un pont de mesure 42 est constitué par un premier enroulement 44 couplé à un second enroulement 46, dans un montage en pont comprenant deux résistances 48 et deux inductances 50. Ce pont possède une entrée 52 et une sortie 54. Les moyens d'excitation d'un tel pont sont constitués par un premier oscillateur 56, délivrant un courant à une fréquence A et par un deuxième oscillateur 58, délivrant un courant à une fréquence B. Les courants délivrés par ces deux oscillateurs sont superposés dans un circuit sommateur 60, suivi d'un amplificateur 62. La sortie de cet amplificateur est réunie à l'entrée 52 du pont.

Le signal de mesure délivré par le pont est véhiculé par la sortie 54. Ce signal est préamplifié par un circuit préamplificateur 64 afin qu'il présente un niveau suffisant pour que puisse s'effectuer l'opération d'équilibrage. Cette opération est réalisée par un circuit 66 qui est conforme à l'invention et qui comprend deux voies 10A et 10B relatives aux deux fréquences A et B. Ce circuit est relié aux oscillateurs 56 et 58 qui lui délivrent les signaux de référence nécessaires, à savoir $V_R(A, O)$ et $V_R(B, O)$ pour les signaux en phase avec l'excitation et $V_R(A, \pi/2)$ et $V_R(B, \pi/2)$ pour les signaux en quadrature, les premiers étant transmis à la voie 10A, les seconds à la voie 10B.

Le circuit de correction 66 délivre les parties résistive $X_A$ et réactive $Y_A$ de la composante à la fréquence A, et les parties résistive $X_B$ et réactive $Y_B$ de la composante à la fréquence B, ces parties étant débarrassées des signaux dus au déséquilibre du pont. Il s'agit de tensions continues qui varient avec le déplacement du pont lorsque celui-ci passe au voisinage d'un défaut de la pièce contrôlée. Ces tensions sont dirigées vers un circuit d'élimination qui comprend un circuit pondérateur 70 sur la voie correspondant à la fréquence A. Ce circuit multiplie les parties $X_A$ et

$Y_A$ respectivement par des coefficients appropriés et délivre des tensions $X_A'$ et $Y_A'$ telles que le module $\sqrt{X_A'^2 + Y_A'^2}$ pour le signal correspondant à un paramètre à éliminer soit égal au module $\sqrt{X_B^2 + Y_B^2}$ du signal relatif au même paramètre pour la fréquence B. Le pondérateur 70 est suivi d'un circuit déphaseur 72, qui modifie les tensions $X_A'$ et $Y_A'$ et délivre de nouvelles tensions $X_A''$ et $Y_A''$ telles que, pour le défaut du paramètre à éliminer, ces nouvelles tensions soient égales aux tensions $X_B$ et $Y_B$ correspondant à la fréquence B.

Des circuits soustracteurs 74X et 74Y effectuent ensuite la différence entre les tensions $X_B$ et $X_A''$ et les tensions $Y_B$ et $Y_A''$. A la sortie des circuits 74X et 74Y sont disponibles deux nouvelles tensions X' et Y' dans lesquelles le paramètre indésirable a été éliminé. Ce sont ces parties qui sont appliquées sur des moyens de visualisation 76, éventuellement après passage à travers un circuit déphaseur 78, qui permet d'orienter les courbes obtenues.

**Revendications**

1. Circuit de correction automatique d'un signal électrique émis par un capteur différentiel pouvant présenter un certain déséquilibre, le signal contenant ainsi une partie due à ce déséquilibre, ce circuit comprenant un analyseur recevant d'une part, une tension de référence et une tension en quadrature avec cette tension de référence, et d'autre part le signal à corriger, cet analyseur délivrant deux tensions continues X et Y proportionnelles aux deux composantes du signal respectivement en phase et en quadrature de phase avec ladite tension de référence, le circuit comprenant encore un sommateur à deux entrées et une sortie, caractérisé en ce qu'il comprend en outre :

A. un amplificateur (14) à gain réglable,

B. des moyens pour commander le gain de l'amplificateur à une valeur maximum et à une valeur minimum et à une valeur qui dépend de la tension obtenue à sa sortie,

C. un premier étage (22) constitué par : un interrupteur (20X), un comparateur à seuil (24X) recevant la tension X ; un compteur-décompteur (26X) relié au comparateur (24X) ; une horloge (27) alimentant le compteur-décompteur (26X) ; un convertisseur numérique-analogique (28X) relié au compteur (26X) ; un multiplieur (30X) à deux entrées et une sortie, l'une des entrées recevant ladite tension de référence et l'autre étant reliée au convertisseur (28X),

D. un deuxième étage (22Y) constitué par : un interrupteur (20Y), un comparateur à seuil (24Y) recevant la tension Y ; un compteur-décompteur (26Y) relié au comparateur (24Y) ; une horloge (27) alimentant le compteur-décompteur (26Y) ; un convertisseur numérique-analogique (28Y) relié au compteur-décompteur (26Y) ; un multiplieur (30Y) à deux entrées et une sortie, l'une des entrées recevant la tension en quadrature avec la tension de référence et l'autre étant reliée au convertisseur (28Y),

E. L'une des entrées du sommateur (32) reliée à la sortie du multiplieur (30X) du premier étage et l'autre à la sortie du multiplieur (30Y) du second étage, et la sortie du sommateur (32) reliée à l'entrée du circuit par un inverseur de phase.

2. Circuit selon la revendication 1, caractérisé en ce que les moyens pour commander le gain de l'amplificateur (14) d'une voie comprennent un détecteur de crêtes (80) relié à l'entrée du circuit, un comparateur (82) relié audit détecteur (80), un circuit bascule monostable (84), une porte logique (80) à deux entrées et une sortie reliée à un circuit (88) de commande automatique du gain de l'amplificateur (14), une porte logique (98) de type ET à trois entrées, l'une reliée au circuit (88) de commande du gain et les deux autres reliées à la sortie des circuits comparateurs à seuil (24X, 24Y), une porte ET unique (100), un circuit monostable (102) relié à cette porte ET unique (100) et une bascule bistable (104) possédant une entrée de remise à zéro, et deux sorties complémentaires, l'une reliée au circuit de commande automatique de gain (88) et l'autre à la porte logique (86) à deux entrées.

3. Circuit selon la revendication 1, caractérisé en ce que l'analyseur (16) est un échantillonneur (17) recevant le signal de référence et le signal en quadrature, cet échantillonneur étant suivi de deux filtres passe-bas (19X, 19Y).

4. Application du circuit selon l'une quelconque des revendications 1 à 3, à la réalisation d'un circuit de correction du signal émis par une sonde de contrôle par courants de Foucault.

## Claims

1. Circuit for the automatic correction of an electrical signal emitted by a differential pick up exhibiting a disequilibrium, whereby the signal has a component caused by the disequilibrium, the circuit comprising an analyser receiving, on the one hand a reference potential and a potential in phase quadrature with the reference potential, and on the other hand the signal to be corrected, said analyser delivering two continuous potentials X and Y proportional to two signal components respectively in phase and in phase quadrature with said reference potential, the circuit also comprising an adding means with two inputs and one output, characterized in that it additionally comprises :

A. a controllable-gain amplifier (14) ;

B. means for controlling the gain of the amplifier to a maximum value, a minimum value, and a value depending on the potential obtained at its output ;

C. a first stage (22) comprising :
a switch (20X), a threshold comparator (24X) receiving the potential X, an up-down counter (26X) connected to the comparator (24X), a timer (27) feeding the up-down counter (26X), an analogue-digital converter (28X) connected to counter (26X), a multiplier (30X) having two inputs and one output, one of the inputs receiving the said reference potential and the other being connected to converter (28X) ;

D. a second stage (22Y) comprising :
a switch (20Y), a threshold comparator (24Y) receiving the potential Y, an up-down counter (26Y) connected to the comparator (24Y), a timer (27) feeding the up-down counter (26Y), an analogue-digital converter (28Y) connected to up-down counter (26Y), a multiplier (30Y) having two inputs and one output, one of the inputs receiving the potential in phase quadrature with the reference potential and the other being connected to converter (28Y) ;

E. one of the inputs of adding means (32) being connected to the output of multiplier (30X) of the first stage, and the other being connected to the output of multiplier (30Y) of the second stage, and the output of adding means (32) being connected to the input of the circuit by a phase-inverter.

2. Circuit according to Claim 1, characterized in that the means for controlling the gain of amplifier (14) in one mode comprise a peak detector (80) connected to the input of the circuit, a comparator (82) connected to said detector (80), a monostable flip-flop circuit (84), a logic gate (86) with two inputs and one output connected to an automatic gain-control circuit (88) of the amplifier (14), a logic gate (98) of the AND type having three inputs, one connected to gain-control circuit (88), the two others being connected to the outputs of threshold comparator circuits (24X, 24Y), a single AND gate (100), a monostable circuit (102) connected to said single AND gate (100) and a bistable flip-flop (104) having an input for resetting to zero, and two complementary outputs, one connected to the automatic gain-control circuit (88) and the other to the logic gate (86) having two inputs.

3. Circuit according to Claim 1, characterized in that the analyzer (16) is a sampling device (17) receiving the reference signal and the phase quadrature signal, said sampling device being followed by two low pass filters (19X, 19Y).

4. Application of the circuit according to any one of Claims 1 to 3, to a circuit for the correction of signals emitted by a control pickup by Foucault currents.

## Ansprüche

1. Schaltungsanordnung zur automatischen Korrektur eines von einem Differentialabtaster abgegebenen Signals, welcher eine gewisse Unausgeglichenheit aufweisen kann und dessen Signal somit einen Teil aufgrund dieser Unausgeglichenheit enthält, wobei diese Schaltungsanordnung einen Analysator, der einerseits eine Bezugsspannung und eine zu dieser Bezugsspannung um $\pi/2$ phasenverschobene Spannung und andererseits das zu korrigierende Signal erhält und zwei Gleichspannungen X und Y abgibt, die den zwei Komponenten proportional sind, welche mit der Bezugsspannung in Phase bzw. um $\pi/2$-phasenverschoben sind, sowie eine Summiereinrichtung mit zwei Eingängen und einem Ausgang umfaßt, dadurch gekennzeichnet, daß ferner vorgesehen sind :

A. ein Verstärker (14) mit regelbarer Verstärkung,

B. Mittel zum Steuern der Verstärkung des Verstärkers auf einen maximalen Wert und einen minimalen Wert und einen Wert, welcher von der an seinem Ausgang erhaltenen Spannung abhält,

C. eine erste Stufe (22), die gebildet ist von einem Schalter (20X), einem Schwellenvergleicher (24X), der die Spannung X erhält, einem mit dem Vergleicher (24X) verbundenen Auf-Ab-Zähler (26X), einem den Auf-Ab-Zähler (26X) speisenden Taktgeber (27), einem mit dem Zähler (26X) verbundenen Digital-Analog-Umwandler (28X), einer Multiplikationseinrichtung (30X) mit zwei Eingängen und einem Ausgang, wobei einer der Eingänge die Bezugsspannung erhält und der andere mit dem Umwandler (28X) verbunden ist,

D. eine zweite Stufe (22Y), die gebildet ist von einem Schalter (20Y), einem die Spannung Y erhaltenden Schwellenvergleicher (24Y), einem mit dem Vergleicher (24Y) verbundenen Auf-Ab-Zähler (26Y), einem den Auf-Ab-Zähler (26Y) versorgenden Taktgeber (27), einem mit dem Auf-Ab-Zähler (26Y) verbundenen Digital-Analog-Umwandler (28Y), einer Multiplikationseinrichtung (30Y) mit zwei Eingängen und einem Ausgang, wobei einer der Eingänge die gegenüber der Bezugsspannung um $\pi/2$-phasenverschobene Spannung erhält und der andere Eingang mit dem Umwandler (28Y) verbunden ist, und

E. wobei einer der Eingänge der Summiereinrichtung (32) mit dem Ausgang der Multiplikationseinrichtung (30X) der ersten Stufe und der andere mit dem Ausgang der Multiplikationseinrichtung (30Y) der zweiten Stufe und der Ausgang der Summiereinrichtung (32) mit dem Eingang der Schaltungsanordnung über einen Phaseninverter verbunden ist.

2. Schaltungsanordnung nach Anspruch 1, dadurch gekennzeichnet, daß die Mittel zum Steuern der Verstärkung des Verstärkers (14) eines Zweigers umfassen eine mit dem Eingang der Schaltungsanordnung verbundene Spitzenerfassungschaltung (80), einen mit der Erfassungsschaltung (80) verbundenen Vergleicher (82), einen monostabilen Multivibrator (84), ein logisches Gatter (86) mit zwei Eingängen und einem Ausgang, der mit einem Schaltkreis (88) zur automatischen Steuerung der Verstärkung des Verstärkers (14) verbunden ist, ein logisches UND-Gatter (98) mit drei Eingängen, von denen einer mit dem Schaltkreis (88) zur Steuerung der Verstärkung und von denen die zwei anderen mit dem jeweiligen Ausgang der Schwellenvergleicher (24X, 24Y) verbunden sind, ein alleiniges UND-Gatter (100), einen mit diesem alleinigen UND-Gatter (100) verbundenen, monostabilen Schaltkreis (102) und ein bistabiles Kippglied (104), welches einen Rückstelleingang und zwei komplementäre Ausgänge aufweist, von denen einer mit dem Schaltkreis zur automatischen Steuerung der Verstärkung (88) und der andere mit dem logischen Gatter (86) mit zwei Eingängen verbunden ist.

3. Schaltungsanordnung nach Anspruch 1, dadurch gekennzeichnet, daß der Analysator (16) ein Prober (17) ist, der das Bezugssignal und das um $\pi/2$-phasenverschobene Signal erhält, und daß diesem Prober zwei Tiefpass-Filter (19X, 19Y) folgen.

4. Verwendung der Schaltungsanordnung nach einem der Ansprüche 1 bis 3 zur Ausbildung eines Schaltkreises zur Korrektur des Signales, welches von einem Untersuchungsfühler durch Foucault-Ströme abgegeben wird.

FIG. 1

FIG. 2

VR(A, π/2)
VR(A,0)

0 012 665

FIG. 3